# EUROPEAN PATENT APPLICATION

(11) **EP 2 149 846 A2**
(43) Date of publication of application: **03.02.2010**
(21) Application number: 09165740.3
(22) Date of filing: 17.07.2009
(51) Int. Cl.: G06F 17/30

(54) **A method and an apparatus for providing multimedia sequences**

(30) Priority: 22.07.2008 EP 08160907
(71) Applicant: Bortal, Karim, 81547 München (DE)
(72) Inventor: Bortal, Karim, 81547 München (DE)
(74) Representative: Charles, Glyndwr

(57) **Abstract**

A method for providing a client computer with multimedia sequences comprising the steps of transmitting a query which indicates a specific multimedia content requested by said client to at least one content provider, returning to said client computer tagged multimedia data which comprise at least one tag matching said query and for each tag content description data which comprises content references to multimedia sequences tagged with said tag.

## Description

The invention relates to a method and an apparatus for providing a client with multimedia sequences and, in particular, tagged multimedia sequences which can be processed by said client to form part of a multimedia film produced by the client.

A film or a movie is a sequence or series of scenes which form a narrative story. Each scene of the movie can itself contain several subscenes. Each scene can be built up out of shots. A shot is a continuous strip of a motion picture film created of a series of frames that runs for an uninterrupted period of time and can have any duration.

Film making is a process of making a movie or a film from an initial story idea. Several stages of film making can be distinguished. In a development stage a script is written and drafted into a workable blue print for the film. In a preproduction stage, preparations are made for the different shots of the film, wherein a casting is performed and a necessary crew is hired. Furthermore, in the preproduction phase of the film making locations are selected and film sets are built up. During the production phase, the raw material of the film is generated and recorded, wherein film scenes are shot and stored. During the postproduction stage, the shot film material is edited. Furthermore, tracks and songs are composed and recorded. Sound effects can be designed and recorded and other computer graphic visual effects can be added to the film.

When the film is fully completed, it is distributed to customers.

During film editing, shots are put together to create a finished film. Because motion pictures television show and TV commercial are shot with a camera per take, every single shot is separated from every other single shot by time and space. During film editing, these shots are assembled into a coherent and continuous film. A film editor is often responsible for pulling together all elements of story, dialog, music, sound effects, visual effects, rhythm and pace of the film to be created. Initially, editing of films has been done with a positive copy of the film negative by physically cutting and taping together pieces of the film. Nowadays, most films are edited digitally. Computer editing does not only permit traditional editing to be divided into steps, from separating of footage, to selection and onto sequencing, from rough cut to fine cut, but with computer editing it is also possible to store all these steps to be called up at any time. Accordingly, computer editing or digital editing is persistent and reversible. The nondestructive easy reversible process allows the editor to compare each detail to each scene. Digital editing allows an evaluation of all sequences of the raw material and various assemblages of these sequences. During editing of the film, separated footage sources are transformed into linear chains of sequences which form the movie. When editing the movie, digital editing allows the editor to cut in music, mob up visual effects and add sound effects or other sound replacements to the film material. Digital editing increases the possibilities for the editor and facilitates the process of film making although the process of film making or multimedia files is still cumbersome and takes a lot of time and resources.

A problem in conventional filmmaking or generation of multimedia files is that the production of the raw material is complex and time consuming. For the production of the raw material, additional crew members have to be recruited, such as a property master, a script supervisor, assistant directors, picture and sound editors. For each film scene, the lightning is rigged and the camera recording equipment has to be set up. The actors have to be prepared for the scene and have to rehearse the scripts. Then, the picture and sound crews rehearse with the actors. Finally, each scene is shot in as many takes as the director wishes. Each take of shot follows a slating procedure and is marked on a clapper board which helps the editor to keep track of the takes in the postproduction. The clapper board records the respective scene or take. The director as well as the name of the film are written on the front of the clapper board and displayed before the camera. Said clapper board also serves the necessary function of providing a marker to make it possible to cut the film and the soundtrack. The sound is recorded on a separate apparatus from the film and is synchronized later in postproduction.

For a film production using digital technologies, shots are downloaded and organized on a computer for display to the editor. The film is then assembled by the film editor in the postproduction stage of the film making process.

A severe disadvantage of the conventional film making process is that in most cases the complete raw material necessary for the film making has to be produced and that the amount of raw material is to a large extend redundant, i. e. the cuts are not used in the final movie. Accordingly, a lot of redundant film material is created according to the film script which cannot be used later.

In conventional film making, it is very difficult to find already existing fitting film material which can be used for a new movie to be created. Although there exist huge archives or repositories storing a plurality of different films or raw materials, it is very difficult and time consuming for a film producer to find already existing film material which can be used for making a new movie. Because of this difficulty, a lot of film material is produced although fitting material already exists and is stored in repositories.

Accordingly, it is an object of the present invention to provide a method and a system which makes it possible for users to produce multimedia sequences by using to a large extend already produced media data stored in data bases.

This object is achieved by a method comprising the steps of claim 1.

The method according to the present invention provides a client with multimedia sequences comprising the steps of:
- transmitting a query which indicates a specific multimedia content requested by said client to at least one content provider;
- returning to said client tagged multimedia data which comprise at least one tag matching said query and for each tag content description data which comprises content references to multimedia sequences tagged with said tag.

In an embodiment of the method according to the present invention, said tagged multimedia form part of multimedia files stored in a database of said at least one content provider.

In an embodiment of the method according to the present invention, said multimedia sequences are tagged in response to said query of said client.

In an embodiment of the method according to the present invention, said content description data comprises:
- at least one time reference to a multimedia sequence of a multimedia file stored in a database of a content provider or in a database of a central server;
- a content provider identifier for identifying said content provider; and
- a multimedia file identifier for identifying said multimedia file.

In an embodiment of the method according to the present invention, said multimedia sequences are tagged by text tags input into a keyboard or by spoken tags input into an acoustic sensor and processed by a speech recognition unit to generate text tags.

In a further embodiment of the method according to the present invention, said tags are automatically generated on the basis of the recognized terms generated by a speech recognition unit on the basis of a separated audio signal of said multimedia file and key words of a query.

In an embodiment of the method according to the present invention, the client selects the multimedia sequences from said tagged multimedia data on the basis of the corresponding tags of said multimedia sequence.

In an embodiment of the method according to the present invention, the client transmits the content description data of the selected multimedia sequences to the content provider identified by the content provider identifier of said content description data.

In an embodiment of the method according to the present invention, the selected multimedia sequences are cut from the corresponding multimedia files identified by the multimedia file identifier of said content description data according to the content references to said multimedia sequences.

In an embodiment of the method according to the present invention, the cut out multimedia sequences are transmitted as multimedia frames from said content provider to said client.

In an embodiment of the method according to the present invention, said multimedia sequences are formed by video or audio sequences.

In an embodiment of the method according to the present invention, said query comprises at least one keyword, a requested data format of the multimedia content and data indicating a type of the requested multimedia content.

In an embodiment of the method according to the present invention, said query is transmitted via a network to a central server which forwards said query to a content provider in case that the multimedia content requested by said client is not stored in a local database of said central server.

The system according to the present invention provides a client with multimedia sequences comprising:
- a client computer which transmits by means of a network a query indicating a specific requested multimedia content to at least one content provider which returns to said client computer tagged multimedia data which comprises at least one tag matching said query and for each tag content description data which comprises content references to multimedia sequences tagged with said tag.

The invention further provides a computer program comprising commands for performing a method for providing a client with multimedia sequences comprising the steps of:
- transmitting a query which indicates a specific multimedia content requested by said client to at least one content provider;
- returning to said client tagged multimedia data which comprise at least one tag matching said query and for each tag content description data (CDD) which comprises time references to multimedia sequences tagged with said tag.

The invention further provides a data carrier for storing such a computer program.

The invention further provides a method for automatic tagging of a multimedia file comprising the steps of:
- separating an audio signal of said multimedia file from the corresponding video signal of said multimedia file;
- performing a speech recognition of the separated audio signal to output recognized terms within said audio signal;
- generating tags on the basis of the recognized terms which match key words of a query; and
- attaching the generated tags to the multimedia file to provide a tagged multimedia file.

The invention further provides an apparatus for tagging of a multimedia file comprising:
- a separation unit for separating an audio signal of the multimedia file from a corresponding video signal of the multimedia file;
- a speech recognition unit for performing a speech recognition on the separated audio signal to provide recognized terms within said audio signal;
- a tagging unit which generates tags depending on the recognized terms and key words of a query and attaches the generated tags to the multimedia file to provide a tagged multimedia file.

In an embodiment of the apparatus according to the present invention, each tag comprises content description data which references to multimedia sequences tagged with said tag.

In an embodiment of the apparatus the tagged multimedia file comprises a video signal, a corresponding audio signal and at least one generated tag attached to the multimedia sequence.

In the following, possible embodiments of the method and system according to the present invention are described with reference to the enclosed figures.
Figure 1 shows a block diagram of a possible embodiment of a system for providing a client with multimedia sequences according to the present invention;
Figure 2 shows a signal diagram for illustrating a possible embodiment of a method for providing a client with multimedia sequences according to the present invention;
Figure 3 shows a diagram for illustrating a data format in a query in a possible embodiment of the method according to the present invention;
Figure 4 shows a flowchart of processing a query by a central server which is performed according to an embodiment of the method of the present invention;
Figure 5 shows a flowchart processing a forwarded query by content provider as performed by an embodiment of the method according to the present invention;
Figure 6 shows a block diagram of a possible embodiment of an apparatus for tagging a multimedia file as employed by a system according to the present invention;
Figure 7 shows a block diagram of an alternative embodiment of an apparatus for tagging of a multimedia file as employed by a system according to the present invention;
Figure 8 shows a flowchart of a possible embodiment of a method for automatic tagging of a multimedia file according to the present invention.
Figure 9 shows a diagram for illustrating the tagging of a multimedia file as employed by the system according to the present invention;
Figure 10 shows a diagram for illustrating a data structure of a tagged multimedia file as employed by the system according to the present invention;
Figure 11 shows a diagram of a possible data structure of tagged multimedia data as employed by the system according to the present invention;

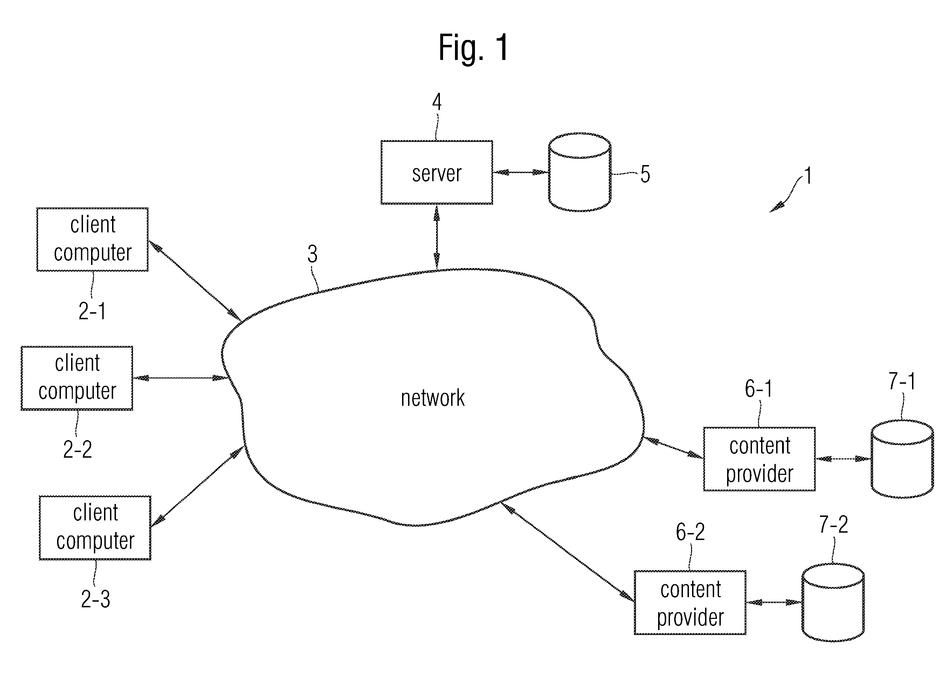

As can be seen from the embodiment as shown in figure 1, a system 1 according to the present invention for providing clients with multimedia sequences comprises several client computers 2-1, 2-2, 2-3 which are connected via a data network 3 to a server 4 which comprises a local data base 5.

Furthermore, several servers of content providers 6-1, 6-2 are connected to the network 3. Each content provider 6-1, 6-2 comprises its own local data base 7-1, 7-2. The number of client computers 2 and content providers 6 can vary. In a possible embodiment, the network 3 is connected to a plurality of client computers 2 and to a plurality of content providers 6. The data network 3 can be formed by a single local area network or by a plurality of networks connected to each other. In a possible embodiment, the network 3 is formed by the Internet.

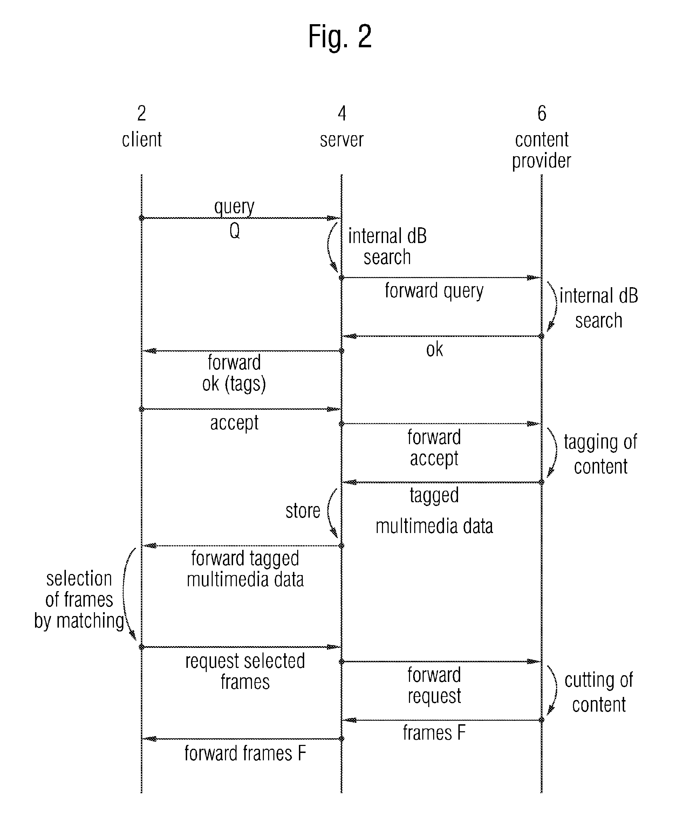

Figure 2 shows a signal diagram for illustrating a possible embodiment of the method according to the present invention.

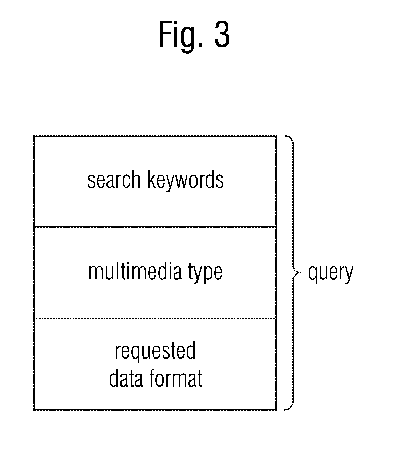

Initially, a client computer 2 of a user sends a query Q which indicates that a specific multimedia content is requested by the user to the central server 4. In a possible embodiment, the query Q comprises one or several key words indicating the desired multimedia content. Furthermore, the query Q can comprise a requested data format of the multimedia content and data indicating the type of the requested multimedia content as shown in the diagram of figure 3. The search key words of the query Q can be input by the user into a input mask displayed on a screen of the client computer 2. In an alternative embodiment, the search key words are extracted from a full text search input by the user by means of a key board of the client computer 2. In an alternative embodiment, the user can select search key words from a group of possible key words provided by the server 4. These search key words can, for example, be displayed in a hierarchical structure and selected by the user. For example, the user can select key words from categories and subcategories of a key word index.

The query Q can include additional information, such as the title of the movie which the user intends to produce. The user can be any user, such as a film maker, but also other users or producers of multimedia data files, such as publishing companies, television broadcasting stations, producers of multimedia maps used for navigation systems or producers of documentary films.

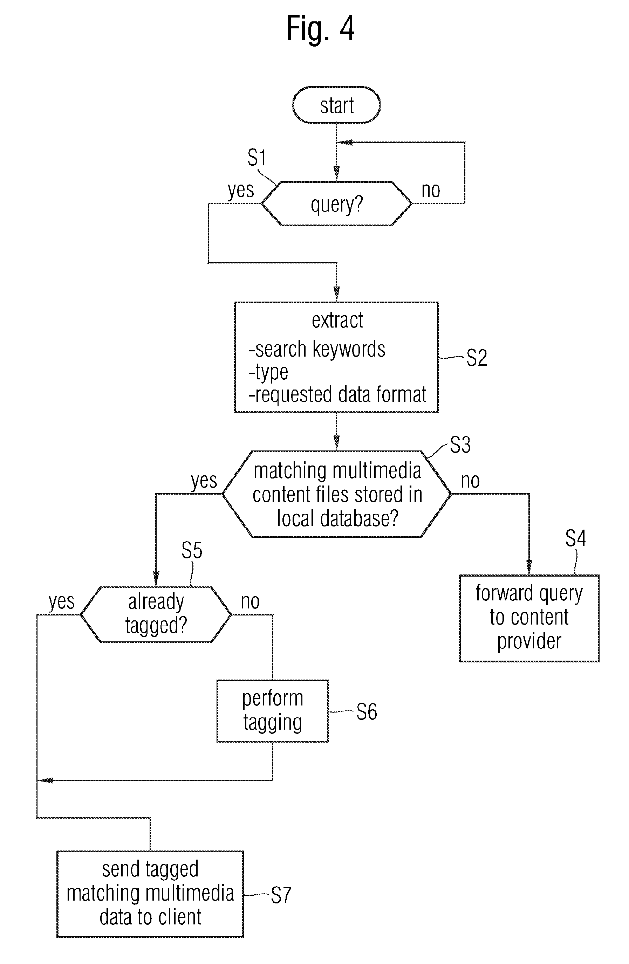

After having received the query Q from a client computer 2 via the network 3, the server 4 performs an internal search in its local database 5 for providing the client computer 2 with tagged multimedia data matching the query Q. As can be seen in the flowchart of figure 4, the server 4 waits in step S1 for a query Q from a client computer 2. After having received a query Q having, for example, the data format as shown in figure 3, the server extracts the search key words, the requested multimedia type and the requested data format in step S2. The query Q can comprise a single key word but also a plurality of key words. In a possible embodiment, the key words are extracted by a software of the server 4 from a full-text query input by a user into its client computer 2. In a possible embodiment, the query Q is sent from the client computer 2 to the server 4 via the network 3 attached to an e-mail.

In a further step S3, the server 4 performs a matching algorithm to decide whether multimedia content files are stored in the local data base 5 matching the extracted search key words, the multimedia type and the requested data format. In a possible embodiment, the matching is performed by calculating a semantic similarity between search key words, the title of the multimedia movie to be produced and the title of the stored content files. If no matching multimedia content file can be found in the local data base 5 of the central server 4, the server 4 forwards the query Q of the client computer in step S4 as shown in the flow chart of figure 4. The forwarded query Q comprises extracted search key words, the extracted multimedia type and the extracted data format. The forwarding of the query Q can also be seen in the signal diagram of figure 2. If the server 4 finds a matching multimedia content file sort in the local database 5, it decides in step S5 whether the multimedia content file is already tagged or not. If the multimedia content file, such as a movie or a movie scene is not already tagged, the server 4 performs a tagging of the multimedia content file in step S6. In a possible embodiment, the tagging is performed automatically. In an alternative embodiment, the tagging is performed semi-automatically by a person. The tagged multimedia data is then sent to the client computer 2 in step S7.

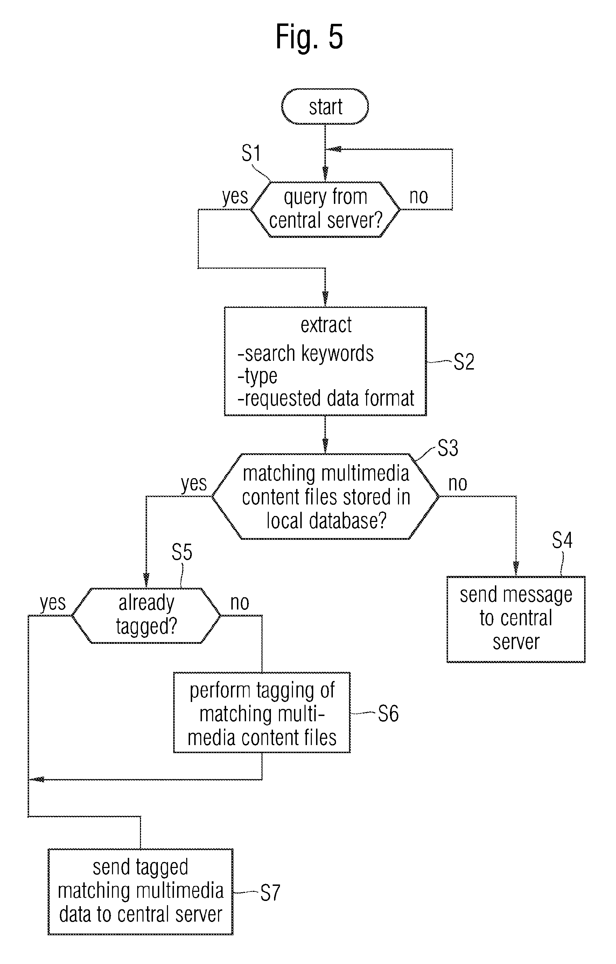

Figure 5 shows a flowchart of a process within a server of a content provider 6. As can be seen in figure 5, the content provider waits for a query Q from the central server 4 in step S1. After reception of the forwarded query Q, the server of the content provider extracts the search key words, the multimedia type and the requested data format in step S2 similar to the process shown in figure 4. The server 4 of the content provider also performs a matching algorithm to look for multimedia content files stored in its local data base 7 which matches the forwarded query Q in step S3. If not matching content files are stored in the local database 7 of the content provider 6, the content provider 6 sends a message to the central server 4 in step S4 indicating that no matching content file could be found in the respective data base 7. If the server of the content provider 6 finds a matching multimedia content file in its local database 7, it is decided whether the stored multimedia content file is already tagged or not in step S5. If the matching multimedia content file is not yet tagged, tagging is performed of the matching multimedia content file in step S6. The tagging of the multimedia content file can be performed automatically or semi-automatically. In step S7 the server of the content provider 6 sends the tagged matching multimedia data back to the central server 4 which is also shown in the signal diagram of figure 2. In an alternative embodiment, the content provider 6 does not send the tagged multimedia data or the tagged multimedia content file but only the generated tags matching the query. In case that the content provider 6 sends the tagged matching multimedia content files and not only the tags, the central server 4 can store the tagged matching multimedia data in its data base 5 to increase the amount of content provided in its local database 5 which can be offered to users.

As can be seen from the flowchart in figures 4, 5 the tagging of already existing multimedia data files is either performed by the server 4 on the basis of the content stored in its local data base 5 or by the content provider 6 on the basis of the content stored in its local database 7.

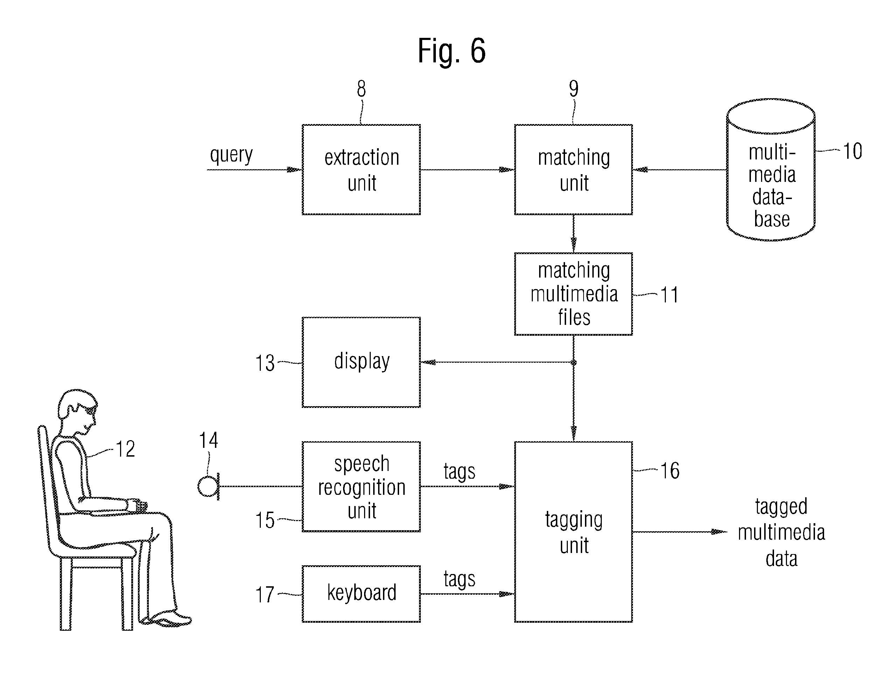

Figure 6 shows a block diagram of a possible embodiment of an apparatus for tagging multimedia data content stored in a database as employed by the system according to the present invention. The apparatus as shown in figure 6 can be provided at the central server 4 or at the content provider 6. In a further embodiment, some client computers 2 are also equipped with a tagging apparatus as shown in figure 6. Accordingly, the apparatus for tagging of multimedia content as shown in figure 6 can be implemented in the client computer 2, in the server 4 or in a content provider server 6 as shown in figure 1.

As can be seen in the block diagram of figure 6, a query Q is applied to an extraction unit 8. The query Q can be the query received via the network 3 by the server 4 or by the content provider server 6 or input into a client computer 2 by means of a key board. The extraction unit 8 extracts from the applied query Q search key words for a requested multimedia type and the requested data format. Extracted search key words, type and data format are applied to a matching unit 9 which performs a matching algorithm between the query Q and multimedia content files stored in the multimedia database 10 as shown in figure 6. The multimedia database 10 can be, for example, formed by the local database 5 of the central server 4 or by a local database 7 of a content provider 6. In alternative embodiments, the matching unit 9 loads the multimedia files to be evaluated from a distant database via a network. In a possible embodiment, the matching 9 performs a semantic matching between the search key words extracted by the extracting unit 8 and reference information of the stored content multimedia files, such as the title of a film. The matching unit 9 stores the matching multimedia files temporarily in a memory 11 for further processing.

In the embodiment of figure 6, tagging is performed semi-automatically by a person 12 as shown in figure 6. The person 12 can be a staff member of a content provider or a company providing a special serving running the central server 4. The person 12, i. e. the tagging person, is informed if a matching multimedia file is found in the multimedia database 10. After activation of the tagging process, the first multimedia file stored in the memory 11, i. e. the first matching multimedia file is displayed on a display 13 to the tagging person 12. The tagging person 12 looks at the displayed multimedia file, e. g. to a displayed movie or film. When looking at the film, the person 12 describes the displayed movie and speaks into an acoustic sensor 14, such as a microphone. A speech recognition unit 15 performs a speech recognition of the received acoustic signal and generates text tags which are supplied to a tagging unit 16. In a possible embodiment, the person 12 inputs the text tags directly into a keyboard 17. In the embodiment as shown in figure 6, the tagging unit 16 attaches the supplied tags to the multimedia file supplied from the memory 11 to provide a tagged multimedia file which can be returned to a client computer 2 of a client or user.

In a possible embodiment, tagging is performed after a user 12, i.e. the tagging person 12 has opened an application software program and selected a spoken language, such as English. In a possible embodiment, first a total length of the displayed multimedia content file is displayed to the tagging person 12. In a possible embodiment, the tagging person 12 can decide whether it wishes to tag the content by inputting text tags or by oral speech. The film to be tagged is started and shown on the display 13. When the film starts, a corresponding time counter is activated and the tagging person can input one or several tags for each minute of the displayed film. In a possible embodiment, the tagging person 12 can adjust the length of the time steps or time periods. For example, the tagging person 12 can input ten tags for every minute of the displayed film. When the film stops, the tagging is accomplished and the tagged multimedia data can be provided to a client computer 2.

In the embodiment as shown in figure 6, the tagging is performed semi-automatically.

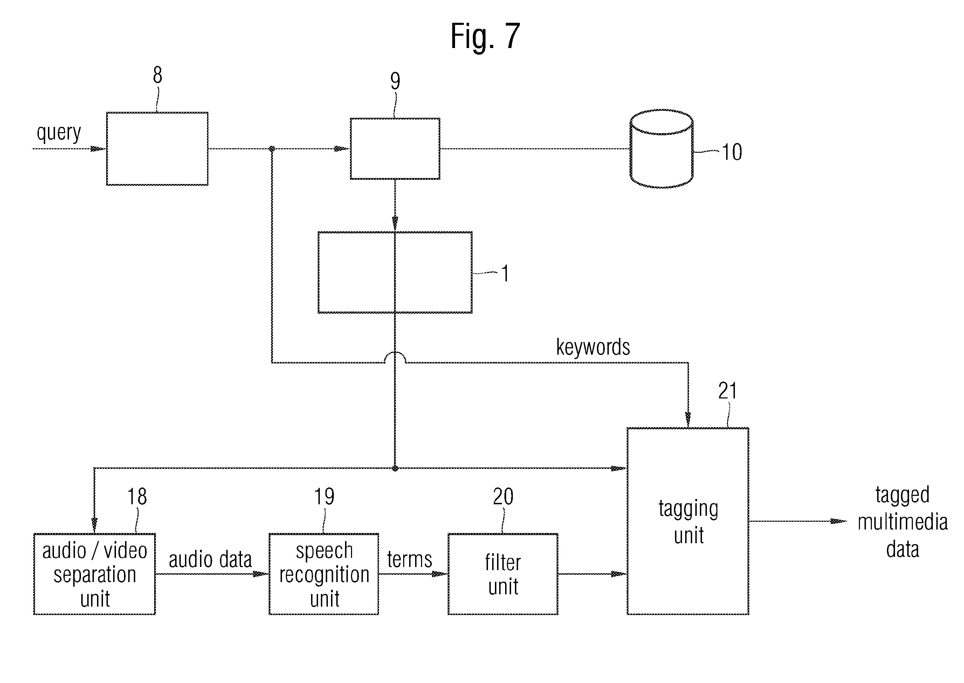

In the embodiment as shown in figure 7, the tagging of the multimedia file is performed fully automatically. The multimedia data files stored in the memory 11 such as a movie each comprise a video signal and an audio signal. A separation unit 18 separates the video data from the audio data and applies the audio signal or audio data to a speech recognition unit 19 which performs a speech recognition on the separated audio signal to provide recognized terms within said audio signal. In a possible embodiment, terms comprise one or several words within the audio signal. In the embodiment as shown in figure 7, a filter unit 20 filters the recognized terms and supplies the filtered terms to a tagging unit 21. The tagging unit 21 generates tags automatically depending on the filtered and recognized terms and depending on key words extracted by the extraction unit 8 from the received query Q. Generated tags are attached by the tagging unit 21 to the multimedia file to provide a tagged multimedia file which can be provided to client computers 2.

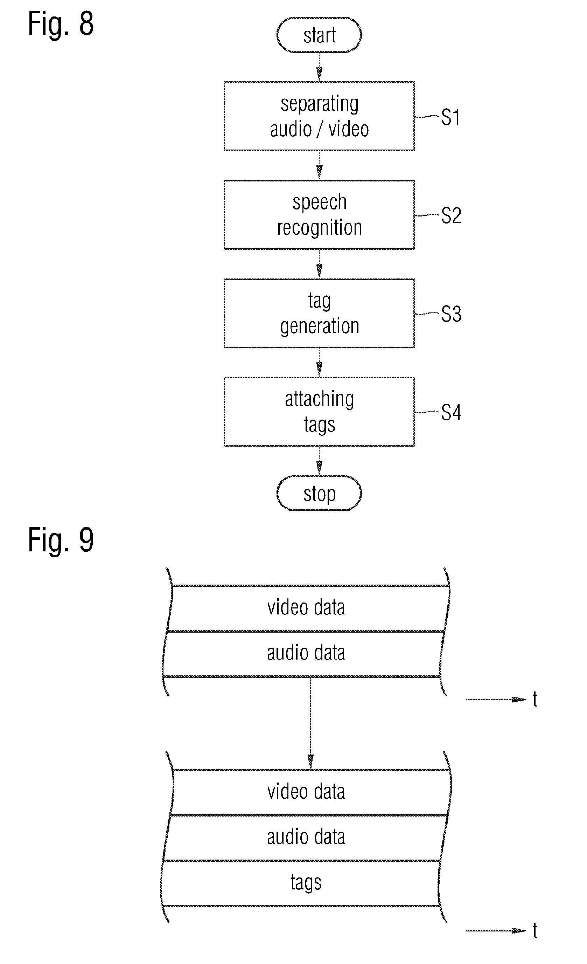

Figure 8 shows a flowchart of an automatic tagging process as performed by the apparatus as shown in figure 7. In a first step S1, an audio signal is separated by the separation unit 18 from the corresponding video signal of the multimedia files stored in the memory 11. In a further step S2, the speech recognition unit 19 performs a speech recognition on the basis of the separated audio signal and outputs the recognized terms within the audio signal, for example to a filter unit 20. In a further step S3, the tagging unit 21 generates tags on the basis of the terms recognized by the speech recognition unit 19 which match key words extracted from the query Q. In a further step S4, the tagging unit 21 attaches the generated tags to the original multimedia file to provide a tagged multimedia file.

Figure 9 illustrates the attachment of tags T to a multimedia file comprising video and audio data. The tags T are generated on the basis of the audio data of the movie automatically and attached to the multimedia file.

In a conventional movie comprising video and audio signals, the audio signal of the film often describes directly or indirectly what happens in the movie. For example, if the multimedia file is a documentary film, the spoken document of the audio signal often clearly describes what is shown in the movie. The comment of the documentary film can be evaluated by the speech recognition unit 19 to provide recognized terms which can be processed by the tagging unit 21 to generate fitting tags T. In a possible embodiment, the tagging unit 21 performs a matching algorithm for matching recognized and filtered terms with key words of the query Q. When documentary films describe in their audio signal what can be seen in the documentary film they are well-suited to be tagged by the automatic tagging apparatus as shown in figure 7. The automatic tagging as performed by the apparatus in figure 7 can also be used for other multimedia films. In conventional movie films, such as a western, the audio signal gives an indication about the scenes displayed in the film. This audio signal can be evaluated for tagging a movie, e. g. the western. For example, the actor in the western talks about the chief of the Sioux Indians, the speech recognition unit 19 might recognize the terms "Sioux" and "Indians" which can be evaluated for matching with key words of the query Q.

In a possible embodiment of the system according to the present invention, tagging by means of the tagging apparatus as shown in figures 6, 7 is done by the content provider 6 or a service provider providing the central server 4.

In a possible embodiment, the tagging is performed immediately after receiving a query Q. To avoid unnecessary tagging, tagging is performed in an alternative embodiment only after an interested client or user has been found.

As can be seen in figure 2, to avoid unnecessary tagging of the raw material, the content provider 6 after successful search first sends a OK-message to the server 4 indicating that a matching multimedia file has been found. In a possible embodiment, the content provider 6 can further send price information indicating a price of the content provider requests for the tagged multimedia data. The server 4 forwards the OK-message to the client computer 2 along with the price information.

The client 2 indicates his interest in receiving the tagged multimedia data by sending an Accept-message to the server 4. The server 4 forwards the Accept-message to the corresponding content provider 6. Only after having received the Accept-message, the content provider server 6 performs a tagging of the found multimedia file. The tagged multimedia data as output by the tagging unit 16 or the tagging unit 21 is sent by the content provider 6 to the server 4 which forwards the tagged multimedia data to the interested client 2. The server 4 can store the tagged multimedia data received from the content provider 6 in its local data base 5 for future queries. The tagged multimedia data sent from the content provider 6 to the client computer 2 comprises at least one tag T matching the original query Q and for each tag T content description data CDD which comprises content references to multimedia sequences tagged with the respective tag T.

The content description data CDD of the tag T comprises at least one time reference to a multimedia sequence of a multimedia file stored in a database 7 of a content provider 6 or stored in a data base 5 of a central server 4. Further, the content description data CDD can comprise a content provider identifier CP-ID for identifying the respective content provider and a multimedia file identifier MF-ID for identifying a multimedia file stored in the data base.

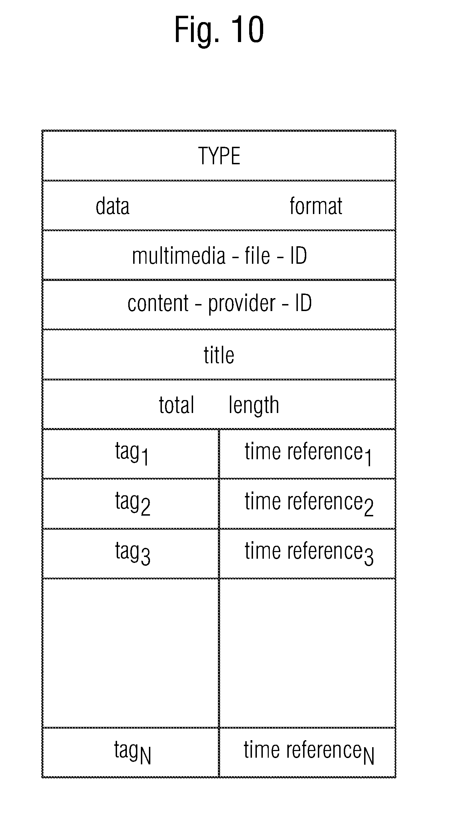

Figure 10 shows a possible data structure of multimedia data tagged according to the present invention and as received by a client computer 2. As can be seen from figure 10, the content description data comprises a content provider-ID for identifying the content provider 6 holding the multimedia file. Furthermore, a multimedia file identifier MF-ID is provided which identifies the respective multimedia file. The tagged multimedia data can comprise further information, such as the title of the multimedia file, the type of the multimedia file and the data format of the multimedia file. Furthermore, the tagged multimedia data comprises a list of tags 1 to tag N each having a time reference to a respective multimedia sequence of the multimedia file. The time reference can be a counter value counting a time from the beginning of the movie. In an alternative embodiment, the time reference indicates a time interval having a starting time point and a terminating time, wherein the tag T labels a content of the movie during the time interval.

The tags T as shown in figure 10 can be attached in a possible embodiment to video and audio data as illustrated in figure 9.

After having received the tagged multimedia data, the user of the client computer 2 can select multimedia sequences or frames from said tagged multimedia data on the basis of the corresponding tags T. In a possible embodiment, the client computer 2 transmits the content description data CDD of the selected multimedia sequences via the server 4 to the content provider 6 as identified by the content provider identifier CP-ID of said content description data CDD.

In a possible embodiment of the system according to the present invention, said cutting of the content is performed by the content provider 6 as shown in figure 2. In this embodiment, the selected multimedia sequences are cut by the content provider 6 from the corresponding multimedia files identified by the multimedia file identifier MF-ID of said content description data CDD according to the time references to the respective multimedia sequences. In a possible embodiment of the system according to the present invention, the user on the client computer side can select tags T of interest by marking these tags T. Cutting on the content provider side is then performed by cutting out the multimedia sequences according to the marked tags. In a possible embodiment, the user on the client computer side can look at the tags T of the received tagged multimedia data and decide whether this sequence might be of interest for him. He can initiate the scene of interest and set a mark M in the tagged multimedia sequence by pushing a start button. If the desired scene in the tagged multimedia sequence is over, the user can press a stop button. While tags T indicate in a possible embodiment a multimedia sequence of a predetermined length of, e. g. one minute, the marks M set by the user indicate a relative short scene within the tagged multimedia sequence of e. g. ten seconds.

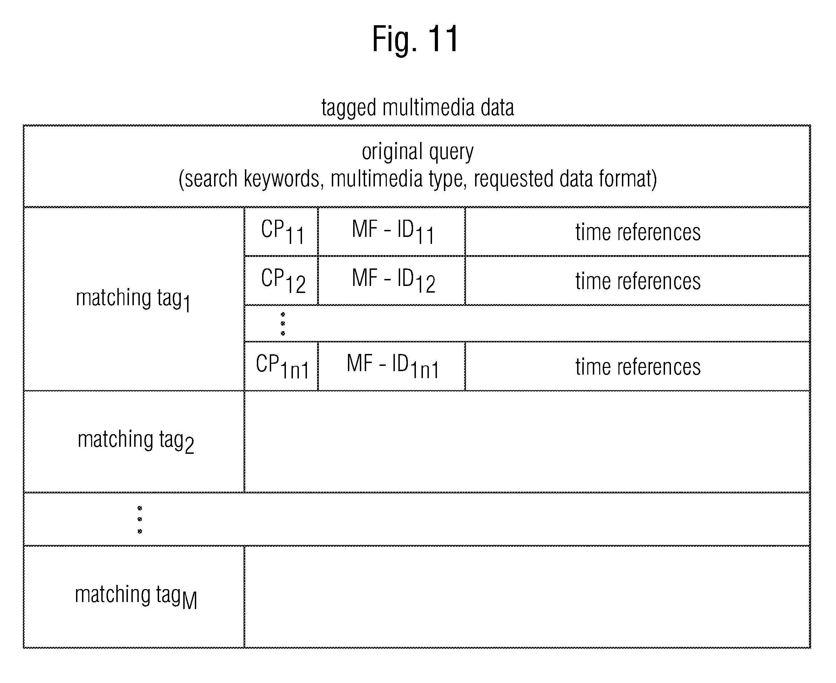

Figure 11 shows a possible data structure of tagged multimedia data according to a possible embodiment of the system according to the present invention. The tagged multimedia data sent by the content provider 6 to the customer running the client computer 2 can comprise the original query Q of the client. Then, the tagged multimedia data can comprise a list of matching tags 1 to M. For example, a client who wishes to produce a documentary film about the wild life in the Arctic can send a corresponding query Q to the central server 4. The query Q might be a full text inquiry, such as: "I wish to produce a documentary film about the wild life in the Arctic and, in particular, about ice bears, seals and whales living in Canada and around Greenland." On the basis of its local database 5 the server 4 after extracting search key words, such as "Arctic", "wild life", "ice bear", "whale", "seal", "Canada" and "Greenland" performs a matching algorithm and forwards the query Q in case that no matching content file can be found in its local database 5. The content provider 6 receives the forwarded query Q and performs a matching algorithm on its own, such as shown in the flowchart of figure 5. In case that the content provider 6 finds a matching media file, it offers it to the client 2 and tags the corresponding content after the client 2 has accepted his offer. Then, the content provider 6 sends a reference to a tagged multimedia data via the server 4 to the client 2. Figure 11 shows a possible data structure of such tagged multimedia data giving a reference for the client. The client 2 receives a list of matching tags 1 to M as shown in figure 11. In the given example, the content provider 6 might have found in its database 7 an old documentary film about ice bears in Canada and another film about Greenland whales. Furthermore, the content provider 6 has a film report about seals living in Patagonia. The first film about ice bears in Canada and the second film about the Greenland whales match both the query Q. The third film about seals living in Patagonia does not match the query Q of the client. Consequently, the first film about the ice bears in Canada and the second film about whales are tagged by the content provider 6 automatically or semi-automatically by a tagging apparatus as shown in the embodiments of figures 6, 7.

The tagged multimedia data is sent by the content provider 6 to the server 4. Since the server 4 can forward the original query Q to a plurality of content providers 6 it can assemble a tagged multimedia data message as shown in figure 11 indicating for several matching tags T different content providers CP with matching file identifications and the corresponding time references. The client 2 receives the tagged multimedia data including tags T matching his query Q along with information about the respective content provider and the time references. For example, the client 2 receives as a matching tag "ice bear" and an address of a content provider as well as an identification number MF-ID of the film "Ice bears in Canada". Then, the client 2 looks at the referenced sequences within the film. For example, an ice bear can be seen in the sixth minute of the film "Ice bears in Canada" as indicated by the tag T sent by the content provider 6. The content provider 6 looks at the sequence of the film showing in deed an ice bear running over the ice and hunting a seal. Since in the given example the client 2 wants to produce a film of the wild life in the Arctic for school pupils, he selects only the part of the sequence wherein the ice bear is running over the ice but not the following killing of the seal by the ice bear. For example, the client 2 sets a mark M for the first twenty seconds of the tagged film sequence but not for the last forty seconds of the film sequence. These first twenty seconds show a running ice bear but not the killing of the seal. The client 2 selects multiple media sequences from the tagged multimedia data on the basis of the corresponding tags T set by the content provider and his preferences for the film to be produced.

By setting marks M, the client 2 selects frames F within the tagged multimedia sequence and sends the requested frames via the server 4 to the content provider 6. The final cutting of the content is done in the embodiment as shown in figure 2 by the content provider 6. The content provider 6 sends the cut frames to the client 2 via the server 4. For example, the client 2 receives a frame F showing the running ice bear lasting twenty seconds. Another example for frames F might be a whale breathing air before a glacier in Greenland lasting seven seconds.

In an alternative embodiment, cutting of the frames F is not performed by the content provider 6 but by a service provider running the central server 4. In a further embodiment, the cutting is performed by the client 2 himself. In a possible embodiment, the marking of audio and video material is performed by a cut master software loaded to a computer from a data carrier. The cut master software is an application software program which can be downloaded in a possible embodiment from the server 4.

The tagging can be performed by a tag creator software running on the computer. In a possible embodiment, the tagging software is loaded from a data carrier. In an alternative embodiment, the tag creator software is downloaded from the server 4 via the network 3.

In the system according to the present invention, each client 2 can be at the same time a content provider 6. In the embodiment as shown in the diagram of figure 2, the tagging and following cutting of the multimedia content is performed by the content provider 6. The client 2 only sends a query Q and performs the selection of the frames on the basis of the tagged multimedia content received from the content provider 6. In the embodiment as shown in figure 2, the server 4 functions as a relay station for forwarding the messages. In an alternative embodiment, the tagging of the content as well as the selection of the frames F and the cutting of the content is performed by a service provider running the server 4.

In a further embodiment, the client 2 not only performs the selection of the frames F but also the final cutting of the content.

The tagging of the multimedia data is performed either semi-automatically or fully automatically as shown in the embodiments of figures 6, 7. In the embodiment as shown in figure 6, the matching multimedia file to be tagged is displayed via a display 13 to a staff member 12 of the content provider 6. In an alternative embodiment, the matching multimedia file stored in a multimedia database, such as a database 7 of the content provider, is displayed via the network 3 directly on a display of a client computer 2. In this embodiment, the tagging is performed by a user, such as a film producer, on the basis of remote content data stored in a database 7 of a content provider 6. In this embodiment, the user or film producer performs both, the tagging of the multimedia data as well as the marking of the tagged multimedia data to select frames F of interest. In an embodiment, the user performs also the final cut of the content on the basis of the tags T and the set markers M.

In a possible embodiment, the query Q can be written in a descriptive language, such as XML. In a possible embodiment, the data is forwarded in compressed form. In a further embodiment of the method and system according to the present invention, the data is also encrypted and uses digital rights management DRM.

The method and system according to the present invention helps a use, such as a film producer, to find very specific multimedia sequences fitting to the produced film he intends to produce. Consequently, the amount of multimedia raw material can be diminished significantly so that the film production can be accelerated.

In a possible embodiment, a search engine running on the server 4 retrieves tagged multimedia data in response to a query Q of a client computer 2, wherein said tagged multimedia data comprises at least one tag T matching the query Q.

## Claims

1. A method for providing a client computer with multimedia sequences comprising the steps of:
(a) transmitting a query (Q) which indicates a specific multimedia content requested by said client (2) to at least one content provider (6);
(b) returning to said client computer (2) tagged multimedia data which comprise at least one tag (T) matching said query (Q) and for each tag (T) content description data (CDD) which comprises content references to multimedia sequences tagged with said tag (T).

2. The method according to claim 1 wherein said tagged multimedia sequences form part of multimedia files stored in a database (7) of said at least one content provider (6) or in a database (5) of a service provider (4), wherein said multimedia sequences are tagged in response to said query (Q) of said client computer (2).

3. The method according to claims 1 or 2, wherein said content description data (CDD) comprises:
- at least one time reference to a multimedia sequence of a multimedia file stored in a database (7) of a content provider (6) or in a database (5) of a central server (4) of a service provider,
- a content provider identifier for identifying said content provider (6), and
- a multimedia file identifier (MF-ID) for identifying said multimedia file.

4. The method according to claims 1 to 3 wherein said multimedia sequences are tagged by text tags input by a user (12) into a keyboard (17) or by spoken tags input by the user (12) into an acoustic sensor (14) and processed by a speech recognition unit (15) to generate text tags.

5. The method according to claims 1 to 4 wherein said multimedia sequences are tagged automatically on the basis of an audio signal of said multimedia sequences. Said tagging comprising the steps of:
- separating an audio signal of said multimedia file from the corresponding video signal of said multimedia file,
- performing a speech recognition on the separated audio signal to output recognized terms within said audio signal,
- generating tags on the basis of recognized terms which match key words of a query, and
- attaching the generated tags to the multimedia file to provide a tagged multimedia file.

6. The method according to claim 4 to 5 wherein said client computer (2) selects multimedia frames (F) from said tagged multimedia sequences on the basis of the corresponding tags (T) of said multimedia sequences according to marks (M) set by the user in the tagged multimedia sequences, wherein said client computer (2) transmits the content description data (CDD) of the selected multimedia frames (F) to the content provider (6) identified by the content provider identifier (CP-ID) of said content description data (CDD), wherein the selected multimedia frames (F) are cut from the corresponding multimedia files identified by the multimedia file identifier (MF-ID) of said content description data (CDD) according to time references of the multimedia frames (F), wherein the cut out multimedia frames (F) are transmitted from said content provider (6) to said client computer (2).

7. The method according to claims 1 to 6 wherein said multimedia sequences are formed by video or audio sequences.

8. The method according to claim 1, wherein said query (Q) comprises at least one keyword (K), a requested data format of the multimedia content and type data indicating a type of the requested multimedia content.

9. The method according to claim 2, wherein said query (Q) is transmitted via a network (3) to said central server (4) which forwards said query (Q) to a content provider (6) in case that the multimedia content requested by said client (2) is not stored in the local database (5) of said central server (4).

10. A System for providing a client computer (2) with multimedia sequences comprising:
a client computer (2) which transmits by means of a network (3) a query (Q) indicating a specific requested multimedia content to a server (4) which returns to said client computer (2) tagged multimedia data which comprises at least one tag (T) matching said query (Q) and for each tag (T) content description data (CDD) which comprises content references to multimedia sequences tagged with said tag (T).

11. A computer program comprising commands for performing the method according to claims 1 to 9 which is executed by a server (4) of a service provider or by a server (6) of a content provider.

12. A data carrier which stores a computer program according to claim 11.

13. A client computer (2) which transmits a query (Q) indicating a specific multimedia content to a server (4) of a service provider and which selects frames (F) from tagged multimedia data received from said server (4) wherein said tagged multimedia data comprises at least one tag (T) matching said query (Q) and for each tag (T) content description data including content references (CDD) to multimedia sequences tagged with said tag (T).

14. An apparatus for tagging of a multimedia file comprising:
(a) a separation unit (18) separating an audio signal of said multimedia file from a corresponding video signal of said multimedia file,
(b) a speech recognition unit (19) for performing a speech recognition on the separated audio signal to provide recognized terms within said audio signal,
(c) a tagging unit (21) which generates tags depending on the recognized terms and key words (K) of a query (Q) and attaches the generated tag (T) to said multimedia file to provide a tagged multimedia file.

15. The apparatus according to claim 14 wherein said apparatus is provided in a server (4) of a service provider or in a server (6) of a content provider or in a client computer (2) of a user.
